# EUROPEAN PATENT SPECIFICATION

(11) **EP 0 551 113 B1**
(45) Date of publication and mention of the grant of the patent: **11.09.1996**
(21) Application number: 93100162.2
(22) Date of filing: 07.01.1993
(51) Int. Cl.: H01H 11/06, H02K 5/14, H02K 5/16, H01H 1/40, B60H 1/00, G05D 3/14

(54) **Method to manufacture a wiring board for a motor-driven actuator, and motor-driven actuator**
Verfahren zur Herstellung einer Leiterplatte für ein motorgetriebenes Betätigungselement und ein solches Betätigungselement
Méthode de fabrication d'une plaque de câblage pour un actionneur entraîné par un moteur, et un tel actionneur

(30) Priority: 06.01.1992 JP 205/92; 25.09.1992 JP 256227/92; 28.09.1992 JP 258029/92
(43) Date of publication of application: 14.07.1993
(73) Proprietor: TGK CO. Ltd., Tokyo 193 (JP); S.K.G. ITALIANA S.r.l., I-43044 Lemignano di Collecchio (Parma) (IT)
(72) Inventor: Hirota, Hisatoshi, Hachioji-shi, Tokyo (JP)
(74) Representative: Grünecker, Kinkeldey, Stockmair & Schwanhäusser Anwaltssozietät

(56) References cited:
- EP-A- 0 358 504
- DE-A- 3 827 470
- US-A- 4 795 867
- PATENT ABSTRACTS OF JAPAN vol. 8, no. 57 (M-283)15 March 1984 & JP-A-58 209 609 (DIESEL KIKI) 6 December 1983
- PATENT ABSTRACTS OF JAPAN vol. 12, no. 218 (M-711)(3065) 22 June 1988 & JP-A-63 017 108 (NIPPON DENSO) 25 January 1988
- PATENT ABSTRACTS OF JAPAN vol. 9, no. 238 (M-416)(1961) 25 September 1985 & JP-A-60 092 922 (MATSUSHITA) 24 May 1985

## Description

The invention relates to a method according to the preamble part of claim 1 and to a motor-driven actuator according to the preamble part of independent claim 6 (see for instance US-A-4 795 867).

The actuator preferably is employed for adjusting the position of a ventilation flap in an automobile air conditioning system and/or a heating system and/or a ventilating system, and under the control of a supervising control unit.

In an actuator as it is already used in practice, the wiring board is a printed board on which the conductive pattern is formed by etching or printing or the like. The bearing hole for the output shaft is formed in the wiring board by press working or the like. The formation of the conductive pattern and the formation of the bearing hole are carried out in quite different manufacturing processes or different working steps. For this reason, a variation or displacement between the relative positions of the bearing hole and the conductive pattern inevitably occurs causing a dislocation in the contact positional relation between the conductive brush and the conductive pattern. Such dislocation possibly prevents the accurate control of the position of the body e.g. ventilating flap, to be driven and adjusted.

DE-A-3827470 discloses a printed board (Figure 14) carrying a conductive pattern defining contact planes for contact brushes of a driven gear mounted in an actuator. The printed board is secured onto a projection of a housing of the actuator and is centered by the projection. The projection surrounds a bearing hole for the shaft of the gear. Since the components are manufactured separately dislocations between the brushes and the conductive pattern on the board can occur due to manufacturing and assembling tolerances.

IN US-A-4795867 a printed board is centered on a hub portion of the lower housing part. The hub portion surrounds the bearing hole for the shaft of the rotatable brush gear. Dislocations between the conductive pattern on the board and the brushes of the gear might occur due to manufacturing tolerances.

EP-A-0355504 refers to an electrical switch having a two-part housing. A cover plate is manufactured with a printed conductive pattern and metal conductor lines defining a variable resistor arrangement in cooperation with a rotor, the spigot of which is received in a bearing hole of the plate. The rotor can be manually rotated in order to vary the resistor behavior accordingly.

JP 55209609 (Application No. JP 820091754) discloses an actuator with a driven gear and a circuit board, the surface of which cooperates with contact brushes of the gear. The printed circuit board is mounted to a bottom plate of the housing of the actuator and is centered by a hub portion provided on the bottom plate. The hub portion surrounds a bearing hole for the shaft of the gear. Since the printed circuit board with its conductive pattern and the bearing hole in the hub portion are manufactured separately, misalignments between the brushes on the gear and the conductive pattern of printed circuit board might occur. Similar designs of actuators are known from JP 63017108 (Application No. 61-161090) and JP 60092922 (Application No. 58-201611). In both last mentioned cases the bearing hole for the shaft is provided in a part of the actuator which is manufactured separately from the printed board.

It is an object of the present invention to provide a method for manufacturing a wiring board for a motor actuator for that type or to provide a motor actuator allowing it to accurately control the stop angle position of the output shaft and to eliminate any dislocation to the contact positional relation between the conductive brush and the conductive pattern.

This can be achieved with the method as described in claim 1 and with the actuator as described in independent claim 6.

Since the bearing hole and the conductive pattern are integrally molded at the same time to the wiring board when the wiring board is molded, the bearing hole and the conductive pattern can be manufactured without any displacement or within a very small range of displacement. Therefore, it is possible to avoid a dislocation or to make a dislocation very small for the contact positional relation between the conductive brush rotating together with the output shaft and the conductive pattern on the wiring board.

The depending claims refer to preferred embodiments of the method and the actuator as disclosed.

Embodiments of the invention will be described with the help of the accompanying drawing. The drawing shows:
- Figure 1:: an exploded perspective view of a first embodiment of' an actuator,
- Figure 2:: an exploded perspective view of an actuator,
- Figure 3:: a second embodiment,
- Figure 4:: a cross section of a structural detail.

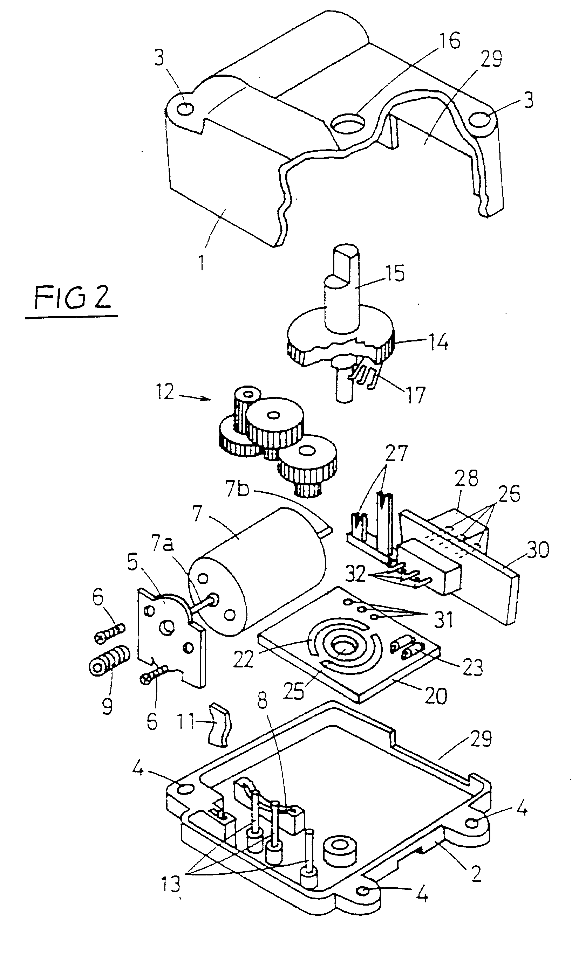

The actuator of Figure 2 does not fall within the scope of the claims, since the wiring board is a printed board. Fig. 2 is merely for illustration purposes.

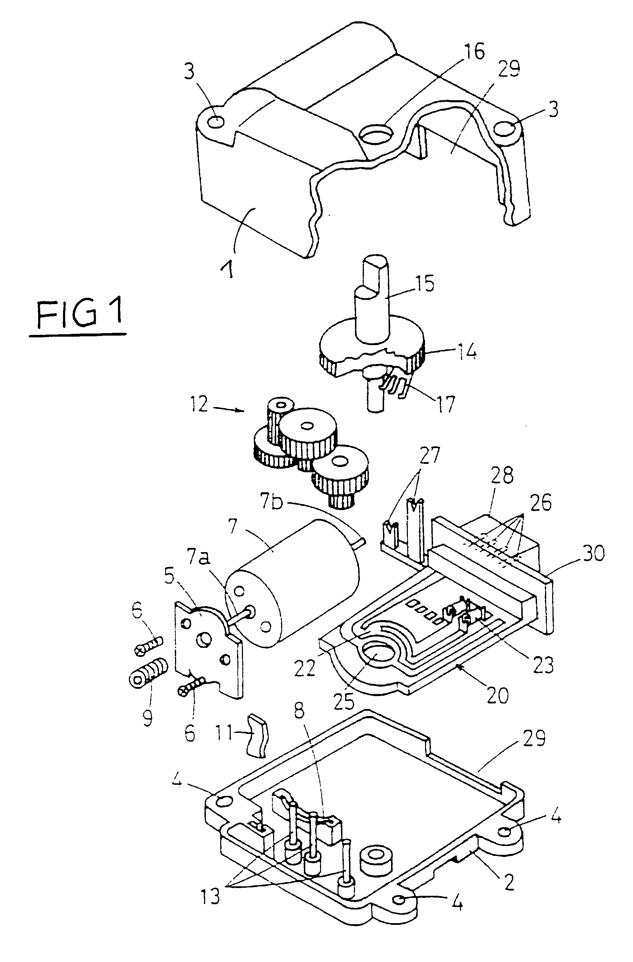

In Fig. 1, upper and lower housings 1 and 2 made of plastic are formed by injection molding, e.g. in an electrically insulated plastic mold, and are secured with each other by passing fixing screws (not shown) through threaded holes 3 and 4.
A motor mounting plate 5 is secured to a motor 7 with mounting screws 6, and its foot is inserted into a slit 8 formed in the floor portion of the lower housing 2 to be thereby secured to the lower housing 2.

A worm gear 9 is mounted to a rotatable shaft 7a of the motor 7, and a supporting plate 11 to be inserted in the lower housing 2 is pressed against the tip of the worm gear 9.
A reduction gear group 12 reduces the rotating speed of the motor 7 for transmission, and is rotatably fitted in shafts 13 vertically provided on the lower housing 2.

At an output gear 14 which meshes with the final gear of the reduction gear group 12, the output shaft 15 is integrally famed so that the rotation of the motor 7 drives the output shaft 15 through the reduction gear group 12 for rotation.

The tip of the output shaft 15 projects outside through a hole 16 drilled in the upper housing 1 to be connected to a link (not shown) in order to drive a body to be driven such as an air conditioning door for an automobile.

On the underside of the output gear 14, there is secured a conductive brush 17, which is rotated around the output shaft 15 together therewith.
On a wiring board 20, a control circuit to control the operation of the motor 7 is provided. On the surface of the wiring board 20, a conductive pattern 22 formed of highly electrically-conductive metallic plate is formed on a concentric circle to come into contact with the rotating conductive brush 17. A diode 23 is connected in the control circuit. In this respect, the shape of the conductive pattern 22 is schematically shown in Fig. 1.

Also, at the center position of the conductive pattern 22, a bearing hole 25 in which the lower end of the output shaft 15 is rotatably fitted is formed in the wiring board 20 so that the conductive brush 17 is rotated around the bearing hole 25.

The wiring board 20 is a plate-shaped body molded using electrically-insulated plastic material, and during molding, the conductive pattern 22 is inserted and integrally molded to the wiring board 20, and the bearing hole 25 is formed by the molding at the same time.

Accordingly, the conductive pattern 22 and the bearing hole 25 are integrally molded when the wiring board 20 is molded, and the conductive pattern 22 and the bearing hole 25 can be manufactured within a very small range of displacement.

As a result, a variation or a displacement occurring in the contact positional relation between the conductive brush 17 which is rotated together with the output shaft 15 fitted in the bearing hole 25 and the conductive pattern 22 becomes very small, and the rotation and stop of the motor 7 are controlled in accordance with the contact relation between the conductive brush 17 and the conductive pattern 22, thus enabling the accurate control of the stop angle position of the output shaft 15.

On the conductive pattern 22, there are continuously formed connecting terminals 26 for connecting to an external control circuit and power supply terminals 27 for connecting to a power terminal 7a of the motor 7. The power supply terminals 27 are bent after molding.

Connecting terminals 26 are disposed in a connector 28 which has been plastic molded integrally with the wiring board 20.
With such a structure, to control the rotation stop position of the output shaft 15, the rotation and stop of the motor 7 are controlled in accordance with the contact relation between the conductive brush 17 and the conductive pattern 22.
In this respect, since a conventional circuit can be used for the control circuit to be connected to the connector 28, the illustration and description thereof is omitted.

The wiring board 20 and the connector 28 which are thus integrally formed can be freely replaced in accordance with the specification of an automotive air conditioner for which the motor actuator is used. Therefore, the shape and the like of the conductive pattern 22 vary depending on the type of the wiring board 20, and the conductive brush 17 may be changed accordingly.

Also, depending on the control circuit formed in the wiring board 20, the number of the connecting terminals 26 within the connector 28 is various: from 2 pieces to ten pieces, and the shape and the size of the connector 28 become different respectively.

The connector 28 is disposed to project outside from the housings 1 and 2. In the upper and lower housings 1 and 2, there are formed connector through-holes 29 through which the connector 28 passes.

However, the connector through-holes 29 are formed to a sufficient size to allow the largest connector 28 for use with a motor actuator of the present embodiment to pass through. Therefore, even if any wiring board 20 and connector 28 are used, the connector 28 can pass through the connector through-holes 29, and therefore there is no need for replacing the upper and lower housings 1 and 2.

However, with the above-mentioned size, the size of the connector through-hole 29 is too large for the connector 28 in almost all cases, and there will be a gap between the connector 28 and the connector through-hole 29.

At the rear end portion of the connector 28, a plate-shaped cover 30 to fill up the gap between the connector 28 and the connector through-hole 29 is integrally formed with the connector 28 or the like to project sideways. The cover 30 is disposed so that its outer edge portion adheres closely to the inner surface side of the both housings 1 and 2 to completely fill up the gap between the connector 28 and the connector through-hole 29.

Fig. 2 illustrates an actuator in which the wiring board 20 is formed of the so-called printed board, and is separated from the connector 28 and the like. In this case, terminals 31 formed in the wiring board 20 and terminals 32 projectingly provided on the rear surface of the connector 28 are connected together by soldering, and the wiring board 20 and the connector 28 can be replaced as a unit.

Since other portions are the same as in the first embodiment as previously described, like reference numerals or symbols are attached to like portions and the explanation will be omitted.

With such a motor actuator, by replacing only the electric circuit and the connector, it is possible to cope with various different specifications, particularly to share a housing even if the specification of the motor actuator is different. Therefore, there is no need for preparing any plastic molding die for the housing for each specification, thus greatly reducing the manufacturing cost.

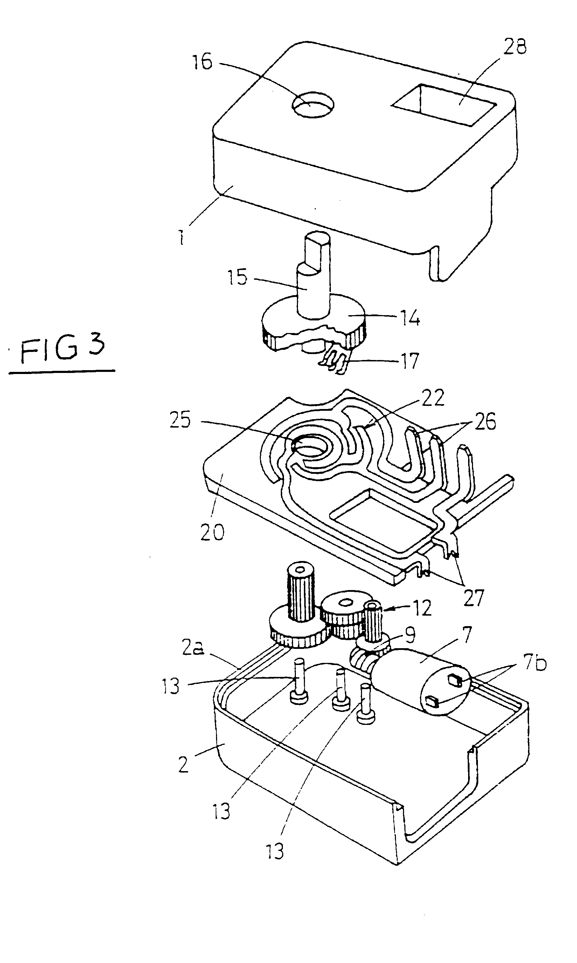

Fig.3 shows a third embodiment according to the present invention, in which the connector 28 is formed on the upper surface side of the upper housing 1, and the connecting terminals 26 are bent upward after molding to be positioned within the connector 28.

Therefore, in the present embodiment, the wiring board 20 is individually formed separately from the connector 28, and if the shape of the connector 28 is changed, it is necessary to change the upper housing 1.
Also, on a staged portion 2a formed on the upper end edge of the lower housing 2, the wiring board 20 is placed, and the motor 7 and the reduction gear group 12 are disposed under the wiring board 20.

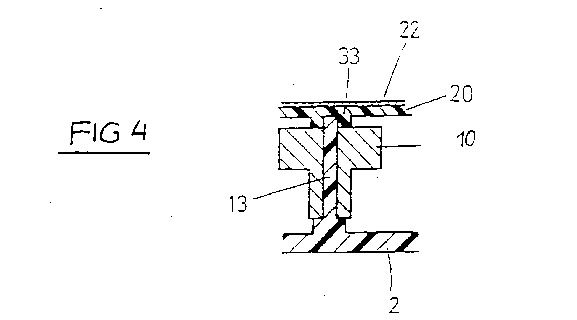

As shown in Fig. 4 a shaft 13 for supporting gear 10 of the reduction gear group 12 is integrally and vertically provided on the lower housing 2, and its upper end engages with a receiver 33 formed in the underside of the wiring board 20.

Since other portions are basically the same as in the first embodiment as previously described, like reference numerals or symbols are attached to like portions and the explanation will be omitted.

## Claims

1. Method for manufacturing a wiring board (20) for a motor-driven actuator, particularly for positioning a fluid-flow control member of an automobile air conditioning - and/or heating - and/or ventilating system, the actuator comprising an output shaft (15) rotatably driven by a motor (7), a conductive brush (17) secured to the output shaft (15), the wiring board (20) being provided with a conductive pattern (22) cooperating with the conductive brush (17) in order to control the rotation and stop of the motor (7) and the stop angle position of the output shaft (15), the wiring board (20) containing at least one bearing hole (25) for the output shaft (15),
**characterised in that**
the relative positions of the bearing hole (25) and the conductive pattern (22) of the wiring board (20) are mutually aligned by integrally molding the bearing hole (25) and the conductive pattern (22) at the same time in the wiring board (20), when the wiring board is molded.

2. Method according to claim 1, **characterised in that** the wiring board (20) is molded as a plate-shaped body of electrically insulating plastic material, that the conductive pattern (22) is inserted into the body, and that the bearing hole (25) is integrally molded into said body simultaneously when the conductive pattern (22) is inserted into said body.

3. Method according to at least one of claims 1 or 2, **characterised in that** the conductive pattern (22) is composed of a highly electrically conductive metallic plate, that the metallic plate is inserted into the plate-shaped body or embedded into the plastic material in order to be integrally molded with the wiring board (20) when molding said plate-shaped body, and that the bearing hole (25) is integrally molded into said body at the same time.

4. Method according to at least one of claims 1 to 3 **characterised in that** the output shaft (15) is rotatably fitted into the bearing hole (25) by matching the diameter of the bearing hole (25) to the outer diameter of the output shaft (15).

5. Method according to at least one of claims 1 to 4, **characterised in that** a surface irregularity (9) is integrally molded on at least one surface of the plate-shaped body when the bearing hole (25) and the conductive pattern (22) are integrally molded in the body.

6. A motor-driven actuator, particularly for positioning a fluid-flow control member of an automobile air conditioning - and/or heating - and/or ventilating system, comprising an output shaft (15) rotatably driven by a motor (7), a conductive brush (17) secured to the output shaft (15), and a wiring board (20) comprising a plate-shaped body of insulating material being provided with a conductive pattern (22) for cooperation with the conductive brush (17) to control the rotation and stop of the motor (7) and the stop angle position of the output shaft (15), the wiring board (20) further being formed with at least one bearing hole (25) for the output shaft (15),
**characterised in that**
the bearing hole (25) and the conductive pattern (22) are integrally molded in said plate-shaped body with mutually aligned relative positions, said plate-shaped body being made of a plastic material.

7. Actuator according to claim 6, **characterised in that** the conductive pattern (22) is a highly electrically conductive metallic plate with a plurality of concentric circular conductors, that the metallic plate is inserted into the plate-shaped body by integrally molding it with the bearing hole (25) into the plate-shaped body in order to position the conductors in coaxial relationship with the bearing hole (25).

8. Actuator according to at least one of claims 6 or 7, **characterised in that** at least one surface irregularity (33) is molded on at least one surface of the plate-shaped body, the surface irregularity (33) being shaped as a receiving socket for a structural axis (13) for a gear (10) belonging to a reduction gear mechanism (12) interconnecting the motor (7) and the output shaft (15).

## Patentansprüche

1. Verfahren zum Herstellen einer Leiterplatte (20) für einen motorgetriebenen Antrieb, insbesondere zum Positionieren eines Fluidstromsteuerglieds eines Automobilluftklima- und/oder Heizungs- und/oder Lüftungssystems, wobei der Antrieb eine drehbar durch einen Motor (7) drehbare Ausgangswelle (15) und eine an der Ausgangswelle (15) befestigte, leitende Bürste (17) aufweist und die Leiterplatte (20) mit einem leitenden Muster (22) versehen ist, das mit der leitenden Bürste (17) kooperiert, um die Drehbewegung und das Anhalten des Motors (7) und die Anhaltewinkelposition der Ausgangswelle (15) zu steuern, und wobei die Leiterplatte (20) wenigstens eine Lagerbohrung (25) für die Ausgangswelle (15) aufweist, **dadurch gekennzeichnet**, daß die relativen Positionen der Lagerbohrung (25) und des leitenden Musters (22) der Leiterplatte (20) gegenseitig aufeinander ausgerichtet sind durch integrales Formen der Lagerbohrung (25) und des leitenden Musters (22) zur gleichen Zeit in der Leiterplatte (20), wenn die Leiterplatte geformt wird.

2. Verfahren gemäß Anspruch 1, **dadurch gekennzeichnet,** daß die Leiterplatte (20) geformt wird als ein plattenförmiger Körper aus elektrisch isolierendem Kunststoffmaterial, daß das leitende Muster (22) in den Körper eingesetzt wird, und daß die Lagerbohrung (25) gleichzeitig und integral in den Körper eingeformt wird, wenn das leitende Muster (22) in den Körper eingesetzt wird.

3. Verfahren nach wenigstens einem der Ansprüche 1 oder 2, **dadurch gekennzeichnet**, daß das leitende Muster (22) besteht aus einer elektrisch hochleitfähigen metallischen Platte, daß die metallische Platte in den plattenförmigen Körper eingesetzt oder in das Kunststoffmaterial eingebettet wird, um mit der Leiterplatte (20) beim Formen des plattenförmigen Körpers integral geformt zu werden, daß die die Lagerbohrung (25) zur gleichen Zeit integral in den Körper eingeformt wird.

4. Verfahren nach den Ansprüchen 1 bis 3, **dadurch gekennzeichnet,** daß die Ausgangswelle (13) drehbar eingepaßt ist in die Lagerbohrung (25) durch Abstimmen des Durchmessers der Lagerbohrung (25) auf den Außendurchmesser der Ausgangswelle (15).

5. Verfahren nach wenigstens einem der Ansprüche 1 bis 4, **dadurch gekennzeichnet,** daß an wenigstens einer Fläche des plattenförmigen Körpers dann eine Oberflächenunregelmäßigkeit (9) integral geformt wird, wenn die Lagerbohrung (25) und das leitende Muster (22) in dem Körper integral geformt werden.

6. Motorgetriebener Antrieb, insbesondere zum Positionieren eines Fluidstromsteuerglieds eines Automobilluft-Klima- und/oder Heizungs- und/oder Lüftungssystems, mit einer durch einen Motor (7) drehbar antreibbaren Ausgangswelle (15), einer leitenden, an der Ausgangswelle (15) befestigten Bürste (17) und einem eilen plattenförmigen Körper aus isolierendem Material aufweisenden Leiterplatte (20), die mit einem leitenden Muster (22) ausgestattet ist zur Kooperation mit der leitenden Bürste (17) zum Steuern der Drehung und des Anhaltens des Motors (7) und der Anhaltwinkelposition der Ausgangswelle (15), wobei die Leiterplatte (20) weiterhin mit wenigstens einer Lagerbohrung (25) für die Ausgangswelle (15) geformt ist, **dadurch gekennzeichnet,** daß die Lagerbohrung (25) und das leitende Muster (22) in dem plattenförmigen Körper integral geformt sind mit gegenseitig ausgerichteten Relativpositionen, und daß der plattenförmige Körper aus einem Kunststoffmaterial hergestellt ist.

7. Antrieb nach Anspruch 6, **dadurch gekennzeichnet**, daß das leitende Muster (26) eine elektrisch hochleitefähige, metallische Platte mit einer Vielzahl konzentrischer kreisförmiger Leiter ist, daß die metallische Platte in den plattenförmigen Körper eingesetzt ist durch integrales Einformen zusammen mit der Lagerbohrung (25) in den plattenförmigen Körper, um die Leiter in koaxialer Relation zu der Lagerbohrung (25) zu positionieren.

8. Antrieb nach wenigstens einem der Ansprüche 6 oder 7, **dadurch gekennzeichnet**, daß zumindest eine Oberflächenunregelmäßigkeit (33) an wenigstens einer Fläche des plattenförmigen Körpers geformt ist, welche als eine Aufnahmefassung für eine strukturelle Achse (13) eines Zahnrades (10) geformt ist, welches zu einem Untersetzungszahnrad-Mechanismus (12) gehört, der den Motor (7) und die Ausgangswelle (15) miteinander vebindet.

## Revendications

1. Procédé de fabrication d'une carte de câblage (20) pour un actionneur entraîné par moteur, en particulier pour positionner un élément de commande d'écoulement de fluide d'un système de ventilation et/ou de chauffage et/ou de climatisation d'automobile, l'actionneur comportant un arbre de sortie (15) entraîné de manière rotative par un moteur (7), un balai conducteur (17) fixé sur l'arbre de sortie (15), la carte de câblage (20) étant munie d'un motif conducteur (22) coopérant avec le balai conducteur (17) afin de commander la mise en rotation et l'arrêt du moteur (7) et la position de l'angle d'arrêt de l'arbre de sortie (15), la carte de câblage (20) comportant au moins un trou de palier (25) pour l'arbre de sortie (15),
caractérisé en ce que
les positions relatives du trou de palier (25) et du motif conducteur (22) de la carte de câblage (20) sont mutuellement alignées par moulage formant un tout du trou de palier (25) et du motif conducteur (22) en même temps que la carte de câblage (20), lorsque la carte de câblage est moulée.

2. Procédé selon la revendication 1, caractérisé en ce que la carte de câblage (20) est moulée en tant que corps en forme de plaque en matière plastique électriquement isolante, en ce que le motif conducteur (22) est inséré dans le corps, et en ce que le trou de palier (25) est moulé formant un tout simultanément à l'intérieur dudit corps lorsque le motif conducteur (22) est inséré dans ledit corps.

3. Procédé selon la revendication 1 ou 2, caractérisé en ce que le motif conducteur (22) est constitué d'une plaque métallique fortement électriquement conductrice, en ce que la plaque métallique est insérée à l'intérieur du corps en forme de plaque ou enrobée dans la matière plastique afin d'être moulée en formant un tout avec la carte de câblage (20) lors du moulage dudit corps en forme de plaque, et en ce que le trou de palier (25) est moulé en même temps formant un tout dans ledit corps.

4. Procédé selon l'une quelconque des revendications 1 à 3, caractérisé en ce que l'arbre de sortie (15) est agencé de manière rotative à l'intérieur du trou de palier (25) par appariement du diamètre du trou de palier (25) et du diamètre extérieur de l'arbre de sortie (15).

5. Procédé selon l'une quelconque des revendications 1 à 4, caractérisé en ce qu'une irrégularité de surface (9) est moulée formant un tout sur au moins une surface du corps en forme de plaque lorsque le trou de palier (25) et le motif conducteur (22) sont moulés formant un tout dans le corps.

6. Actionneur entraîné par moteur, en particulier pour le positionnement d'un élément de commande d'écoulement de fluide d'un système de ventilation et/ou de chauffage et/ou de climatisation d'automobile, comportant un arbre de sortie (15) entraîné de manière rotative par un moteur (7), un balai conducteur (17) fixé sur l'arbre de sortie (15), et une carte de câblage (20) comportant un corps en forme de plaque constitué d'un matériau isolant qui est muni d'un motif conducteur (22) pour coopération avec le balai conducteur (17) pour commander la mise en rotation et l'arrêt du moteur (7) et la position de l'angle d'arrêt de l'arbre de sortie (15), la carte de câblage (20) étant munie en outre d'au moins un trou de palier (25) pour l'arbre de sortie (15),
caractérisé en ce que
le trou de palier (25) et le motif conducteur (22) sont moulés formant un tout dans ledit corps en forme de plaque en ayant des positions relatives alignées mutuellement, ledit corps en forme de plaque étant constitué d'une matière plastique.

7. Actionneur selon la revendication 6, caractérisé en ce que le motif conducteur (22) est une plaque métallique fortement électriquement conductrice ayant plusieurs conducteurs circulaires concentriques, en ce que la plaque métallique est insérée à l'intérieur du corps en forme de plaque par moulage formant un tout de celle-ci avec le trou de palier (25) à l'intérieur du corps en forme de plaque afin de positionner les conducteurs selon une relation coaxiale avec le trou de palier (25).

8. Actionneur selon la revendication 6 ou 7, caractérisé en ce qu'au moins une irrégularité de surface (33) est moulée sur au moins une surface du corps en forme de plaque, l'irrégularité de surface (33) étant formée sous forme d'une douille de réception pour un axe structurel (13) d'un engrenage (10) appartenant à un mécanisme d'engrenages de réduction (12) reliant de manière mutuelle le moteur (7) et l'arbre de sortie (15).
